# EUROPÄISCHE PATENTSCHRIFT

(11) **EP 3 631 219 B1**
(45) Veröffentlichungstag und Bekanntmachung des Hinweises auf die Patenterteilung: **23.06.2021**
(21) Anmeldenummer: 18728342.9
(22) Anmeldetag: 25.05.2018
(51) Int. Cl.: F16C 3/035, F16C 29/04, F16C 33/38, B62D 1/16, B62D 1/20

(54) **LENKWELLE FÜR EIN KRAFTFAHRZEUG**
STEERING SHAFT FOR A MOTOR VEHICLE
ARBRE DE DIRECTION POUR UN VÉHICULE AUTOMOBILE

(30) Priorität: 31.05.2017 DE 102017209167
(43) Veröffentlichungstag der Anmeldung: 08.04.2020
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2018/063805
(87) Internationale Veröffentlichungsnummer: WO 2018/219817

(56) Entgegenhaltungen:
- DE-A1-102007 027 767
- DE-A1-102014 017 555
- DE-A1-102015 102 183
- DE-A1-102016 224 271

## Beschreibung

Die Erfindung betrifft eine Lenkwelle für ein Kraftfahrzeug, umfassend eine Hohlwelle, in der koaxial eine Innenwelle in Achsrichtung teleskopierbar angeordnet ist, wobei mindestens ein Wälzkörper in Umfangsrichtung formschlüssig und in Achsrichtung abrollbar in einem Wälzkörperaufnahmeelement eines zwischen Innenwelle und Hohlwelle angeordneten Wälzkörperkäfigs aufgenommen ist, der in Achsrichtung zwischen radial vorstehenden Anschlagelementen der Hohlwelle und radial vorstehenden Anschlagelementen der Innenwelle angeordnet ist, wobei der Wälzkörperkäfig endseitige axiale Stützflächen aufweist, die in Achsrichtung gegen die Anschlagelemente gerichtet sind, wobei der der Wälzkörperkäfig zumindest ein Übertragungselement aufweist, welches sich axial zwischen den Stützflächen erstreckt. Ein Wälzkörperkäfig für eine Lenkwelle ist ebenfalls Gegenstand der Erfindung.

Der Einsatz einer in ihrer Achsrichtung teleskopierbaren Lenkwelle in einem Kraftfahrzeug ermöglicht eine Verstellung der Lenksäule zur Einstellung der Lenkradposition in Längsrichtung. Außerdem kann die Lenkwelle im Fall eines Crashs in Richtung ihrer Längsachse in sich zusammengeschoben werden, wodurch wirksam verhindert wird, dass die Lenkwelle in das Innere der Fahrgastzelle eindringt und zu Verletzungen der Insassen führt. Dies wird erreicht durch zwei gegeneinander teleskopierbare Wellen, nämlich einer Hohlwelle, die als äußere Welle bzw. Außenwelle durch ein rohrförmigen Hohlprofil gebildet wird, und einer darin in Richtung der Längsachse (Achsrichtung) der Lenkwelle teleskopartig, d.h. koaxial und axial verschieblich gelagerten inneren Welle, an deren bezüglich der Fahrtrichtung hinteren Ende das Lenkrad montiert ist. Durch teleskopierendes Zusammenschieben oder Ausziehen von Innenwelle und Hohlwelle kann die Lenkwelle verkürzt oder verlängert werden.

Zwischen der Hohlwelle und der Innenwelle sind in der gattungsgemäßen Bauweise zumindest ein, in der Regel mehrere Wälzkörper angeordnet. Die Wälzkörper können zwischen der Außenfläche der Innenwelle und der Innenfläche der Hohlwelle in Richtung der Längsachse abrollen, so dass eine leichtgängige wälzkörpergelagerte axiale Verstellbarkeit der Innenwelle relativ zur Hohlwelle realisiert wird. Zur Übertragung des zur Lenkung eingebrachten Drehmoments weisen die Innenwelle auf ihrer Außenseite und die Hohlwelle auf ihrer Innenseite nutförmige, einander radial gegenüberliegende, in Richtung der Längsachse verlaufende Wälzkörperlaufbahnen auf, zwischen denen die Wälzkörper angeordnet sind und als Formschlusselemente dienen zur Bildung eines bezüglich einer Drehung um die Längsachse wirksamen Formschlusses, der Hohl- und Innenwelle drehmomentschlüssig miteinander verbindet. Gattungsgemäße Lenkwellen werden daher auch als Rollschiebewellen bezeichnet.

Die Wälzkörper sind in einem Wälzkörperaufnahmeelement des Wälzkörperkäfigs um ihre Abrollachsen frei drehbar aufgenommen, wie beispielsweise in der DE 10 2014 017 555 A1 beschrieben, wodurch sie zwischen den Wellen und insbesondere mit axialem Abstand relativ zueinander in Position gehalten und geführt werden. Das Wälzkörperaufnahmeelement weist mindestens eine, in der Regel mehrere Wälzkörperaufnahmen auf, beispielsweise Kugelaufnahmeöffnungen.

Im Normalbetrieb kann eine Lenksäule zur Einstellung der Lenkradposition kontrolliert innerhalb des vorgesehenen Verstellwegs verstellt werden. Um sicherzustellen, dass die Lenkwelle nicht über den maximalen Verstellweg hinaus in Längsrichtung auseinander gezogen wird, beispielsweise durch unsachgemäße Handhabung oder auch bei einer Reparatur des Fahrzeugs, wodurch die Innenwelle aus der Hohlwelle vollständig herausgezogen und dadurch von der äußeren Welle getrennt würde, ist es bekannt, eine Auszugsicherung in Form einer Auszugsbegrenzungsvorrichtung vorzusehen, welche den Verstellweg der Teleskopierung begrenzt und ein Trennen von innerer und äußerer Welle ausschließt. Bei einem sicherheitsrelevanten Bauteil wie einer Lenksäule muss eine derartige unbeabsichtigte Demontage, die zur Auftrennung des Lenkstrangs führt, auf jeden Fall sicher verhindert werden.

Die aus der DE 10 2014 017 555 A1 bekannte Auszugsicherung umfasst ein erstes Anschlagelement, welches an dem offenen Ende der Außenwelle, in das die Innenwelle eintaucht, radial nach innen vorstehend angebracht ist, und ein zweites Anschlagelement, welches an dem in die Außenwelle eintauchenden Ende der Innenwelle radial nach außen vorstehend angebracht ist. Die Anschlagelemente haben im Zwischenraum zwischen Außen- und Innenwelle einander in Achsrichtung gegenüberliegende axiale Anschlagflächen, zwischen denen sich der Wälzkörperkäfig befindet. Der Wälzkörperkäfig weist an beiden axialen Enden stirnseitige Stützflächen auf, die den Anschlagflächen axial gegenüberliegen. Der maximale Auszug wird durch den Endanschlag der Auszugbegrenzung begrenzt, wobei die Anschlagelemente axial beidseitig gegen die Stützflächen des Wälzkörperkäfigs anschlagen. Dadurch nimmt der Wälzlagerkäfig die beim Auseinanderziehen ausgeübte Zugkraft über die Stützflächen als axiale Druckkraft auf. Großen Auszugkräften, d.h. Kräfte in Achsrichtung, die die Lenkwelle auseinander ziehen, durch missbräuchliche oder versehentliche Verstellung wirken entsprechend als hohe Belastung auf den Wälzlagerkäfig, die zu unerwünschten Verformungen oder Schäden führen kann, insbesondere auch an dem Wälzkörperaufnahmeelement, welche die Funktionsfähigkeit der Verstellung beeinträchtigen können.

Angesichts der vorangehend erläuterten Problematik ist es eine Aufgabe der vorliegenden Erfindung, eine verbesserte Lenkwelle anzugeben, die hohe Auszugkräften besser aufnehmen kann und die eine höhere Betriebssicherheit hat, sowie einen verbesserten Wälzkörperkäfig.

### Darstellung der Erfindung

Diese Aufgabe wird gelöst durch eine Lenkwelle mit den Merkmalen des Anspruchs 1, sowie einen Wälzkörperkäfig mit den Merkmalen des Anspruchs 10. Vorteilhafte Weiterbildungen ergeben sich aus den Unteransprüchen. Die schon hiervor genannte DE 10 2014 017 555 A1 offenbart die vorkennzeichnenden Merkmale der Ansprüche 1 und 10.

Erfindungsgemäß wird für eine Lenkwelle der eingangs genannten Art vorgeschlagen, dass das Übertragungselement zumindest teilweise aus einem härteren und/oder festeren Material ausgebildet ist als das Material des Walzkörperaufnahmeelements.

Im Endanschlag beim maximalen Auszug der Lenkwelle wird die in Auszugrichtung zwischen Außen- und Innenwelle auf Zug wirkende Auszugkraft über die Anschlagelemente in die axial dagegen abgestützten Stützflächen des Wälzkörperkäfigs eingeleitet. Dabei wird das erfindungsgemäß die Stützflächen axial steif miteinander verbindende Übertragungselement mit der Auszugkraft auf Druck beansprucht, und überträgt die eingeleitete Druckkraft zwischen den Anschlagelementen der Hohlwelle und den Anschlagelementen der Innenwelle.

Das Übertragungselement ist als Kraftübertragungselement parallel zum Wälzkörperaufnahmeelement angeordnet, und fängt die im Endanschlag auf den Wälzkörperkäfig wirkende Auszugkraft ab. Der Kraftfluss der Auszugskraft zwischen Innenwelle und Hohlwelle, wenn diese sich in voll ausgezogener Stellung befinden, erfolgt somit nicht wie im Stand der Technik über das Wälzkörperaufnahmeelement, sondern durch das Übertragungselement. Dadurch wird das Wälzkörperaufnahmeelement gegen die Einwirkung der Auszugkraft abgeschirmt und geschützt, so dass auch bei extrem hohen Belastungsspitzen keine schädliche Verformung auftritt, die im Stand der Technik beispielsweise zu einer Blockierung der Wälzkörper in den Wälzkörperaufnahmen führen könnte. Es wird auch einer Beschädigung oder Entfernung der Wälzkörper entgegengewirkt, die zu einer Behinderung oder Blockierung der teleskopierenden Verstellbarkeit führen kann, was unter Umständen das Zusammenschieben der Lenksäule im Crashfall erschweren kann und somit die Sicherheit beeinträchtigt.

Ein erfindungsgemäß ausgestalteter Wälzkörperkäfig ist unempfindlicher gegen durch missbräuchliche oder versehentliche Betätigung ausgeübte hohe Belastungen. Dadurch werden die Betriebssicherheit der Lenkwelle und somit der Lenksäule und das Sicherheitsniveau für die Fahrzeuginsassen erhöht.

Das erfindungsgemäße Übertragungselement ist in axialer Richtung drucksteif und starr ausgebildet, und erstreckt sich über die axiale Länge des Wälzkörperkäfigs. Bevorzugt ist das Übertragungselement bezüglich Druckbeanspruchung härter und/oder steifer und/oder fester ausgebildet als ein Wälzkörperaufnahmeelement. Falls der Wälzkörperkäfig mehrere Wälzkörperaufnahmeelemente und/oder mehrere Übertragungselemente aufweist, ist die Härte, Steifigkeit und/oder Festigkeit der Übertragungselemente zumindest in Summe höher als die der Wälzkörperaufnahmeelemente. Insbesondere wird die Härte, Steifigkeit und/oder Festigkeit des oder der Übertragungselemente so hoch gewählt, dass die Formstabilität gegenüber mechanischer Beanspruchung gesteigert wird und auch bei den höchsten zu erwartenden Spitzenbelastungen der Auszugkraft keine wesentliche, die Funktion beeinträchtigende Verformung des Wälzkörperkäfigs erfolgt, und insbesondere eine plastische Deformierung verhindert wird.

In einer vorteilhaften Weiterbildung kann es vorgesehen sein, dass das Übertragungselement in axialer Richtung länger ausgebildet ist als das Wälzkörperaufnahmeelement. Dadurch kann erreicht werden, dass das Übertragungselement zwar in Kontakt mit den Anschlagelementen der Hohlwellen und den Anschlagelementen der Innenwelle über die Stützflächen steht, jedoch das Wälzkörperaufnahmeelemente nicht belastet wird und nicht in Kontakt mit jeweiligen Anschlagelementen gelangt, auch wenn extreme Belastungen wirken, die eine elastische Verformung der Übertragungselemente in Achsrichtung zur Folge haben könnten.

Alternativ oder zusätzlich kann zur Erhöhung der Steifigkeit vorgesehen sein, dass das Übertragungselement eine Materialverdickung aufweist. Im Bereich der Materialverdickung kann der Querschnitt in radialer Richtung vergrößert sein, so dass eine profilartige Längsrippe gebildet wird, an deren stirnseitigen Enden sich die Stützflächen befinden. Darüber hinaus kann das Übertragungselement durch die Materialverdickung als Formschlusselement ausgestaltet sein, welches Innen- und Hohlwelle bezüglich Drehung um die Achse formschlüssig miteinander verbinden kann. Dabei können die Abmessungen so angepasst werden, dass sich die Materialverdickung im normalen Betriebszustand, wenn das Lenkmoment über den Formschluss durch die Wälzkörper übertragen wird, im losen Formschluss zwischen Innen- und Hohlwelle befindet. Falls jedoch die Wälzkörper ausfallen, greift das Übertragungselement formschlüssig ein, wodurch die Lenkwelle im Notfall funktionsfähig bleibt. Durch die Zusatzfunktion des erfindungsgemäßen Übertragungselement als redundantes Formschlusselement wird das Sicherheitsniveau der Lenksäule weiter erhöht.

Das Material des Übertragungselements kann ein metallisches Material sein. Ein metallisches Material bietet eine hohe Belastbarkeit und Formsteifigkeit bei vergleichsweise kleinem Materialquerschnitt, so dass ein erfindungsgemäß ausgestalteter Wälzlagerkäfig problemlos in dem zwischen Innen- und Hohlwelle zur Verfügung stehenden Bauraum untergebracht werden kann. Beispielsweise kann das Übertragungselement aus Stahl gefertigt sein, beispielsweise als hochfestes und effizient zu produzierendes Massivumformteil, oder auch als Sinterteil aus einem metallischen Sinterwerkstoff, oder als Druckgussbauteil aus Zamak oder dergleichen.

Das Wälzkörperaufnahmeelement kann als Kunststoff-Spritzgussteil ausgebildet sein. Die Fertigung im Kunststoff-Spritzguss ist rationell und ermöglicht eine optimierte Formgebung der Wälzkörperaufnahmen, um die Wälzkörper sicher zu positionieren und zu halten und dabei gleichzeitig leicht drehbar zu lagern. Als Kunststoff kann ein thermoplastisches Polymer mit geeigneten Eigenschaften, beispielsweise hinsichtlich Festigkeit und Gleiteigenschaften gewählt werden. Dadurch, dass erfindungsgemäß die Drucksteifigkeit vom Übertragungselement übernommen und das Wälzkörperaufnahmeelement entlastet wird, kann ein günstig zu verarbeitendes Kunststoffmaterial verwendet werden, und das Wälzkörperaufnahmeelement kann eine funktional optimierte, filigrane Form haben, die bezüglich Druckbelastung eine relativ geringe Formsteifigkeit hat. Dadurch ergibt sich eine größere Gestaltungsfreiheit als im Stand der Technik. Beispielsweise können mehrere Wälzkörperaufnahmeelemente in Form eines einstückigen Spritzgussteils zur Verfügung gestellt werden.

Dadurch, dass das Wälzkörperaufnahmeelement und das Übertragungselement hinsichtlich Formgebung und Material unabhängig voneinander gestaltet und zur Bildung des Wälzkörperkäfigs miteinander verbunden werden, kann eine optimierte Anpassung an die jeweilige Funktion erfolgen.

Der Wälzkörperkäfig kann hülsenförmig ausgebildet sein, mit einem die Innenwelle zumindest abschnittweise umschließenden Querschnitt. Beispielsweise kann der Wälzkörperkäfig hohlzylindrisch-rohrabschnittförmig, oder hohlprofilartig mit unrunder oder mehreckiger Querschnittsform ausgebildet sein. Die Stützflächen befinden sich dann auf den Stirnseiten an beiden Enden des Hohlprofils.

Alternativ kann der Wälzkörperkäfig in Umfangsrichtung segmentartig ausgebildet sein, wobei eine oder mehrere, schienenartige Wälzkörperkäfigsegmente gebildet werden, von denen jedes zumindest ein Wälzkörperaufnahmeelement oder ein erfindungsgemäßes Übertragungselement aufweist, besonders bevorzugt jeweils mindestens ein Wälzkörperaufnahmeelement und ein Übertragungselement.

Zumindest ein, bevorzugt eine Mehrzahl derartiger Übertragungselemente kann in Umfangsrichtung benachbart zu einem Wälzkörperaufnahmeelement angeordnet sein. Durch diese Zuordnung ist das Wälzkörperaufnahmeelement gut gegen schädliche Krafteinwirkung abgeschirmt und gesichert und eine einwirkende axiale Anschlagkraft wird sicher zwischen den Stützflächen übertragen. Eine Mehrzahl von Wälzkörperaufnahmeelementen und Kraftübertragungselementen kann über den Umfang verteilt angeordnet sein, bevorzugt abwechselnd.

In einer vorteilhaften Ausführung ist es möglich, dass das Übertragungselement und das Wälzkörperaufnahmeelement formschlüssig und/oder kraftschlüssig und/oder stoffschlüssig miteinander verbunden sind. Das Übertragungselement und das Wälzkörperaufnahmeelement können je nach den zu erwartenden Beanspruchungen individuell konzipiert und ausgelegt werden, und als separate Elemente gefertigt und zur Verfügung gestellt werden, die in der nachfolgenden Fertigung zu einem Wälzkörperkäfig miteinander verbunden werden. Dadurch können insbesondere aus unterschiedlichen Materialien bestehende Übertragungs- und Wälzkörperaufnahmeelemente zu einer funktionalen Einheit miteinander kombiniert werden, beispielsweise kann ein aus Kunststoff bestehendes Wälzkörperaufnahmeelement mit einem metallischen Übertragungselement kombiniert werde. Beispielsweise können Übertragungs- und Wälzkörperaufnahmeelemente miteinander korrespondierende Formschlusselemente aufweisen, die zur Erzeugung einer formschlüssigen Verbindung miteinander in Eingriff gebracht werden können, wie etwa Formschlussvorsprünge und -vertiefungen zur Erzeugung einer in Umfangsrichtung, axial und/oder radial wirksamen Formschlussverbindung. Dadurch können in ihren Eigenschaften unterschiedliche Übertragungs- und Wälzkörperaufnahmeelemente separat gefertigt und je nach Bedarf zu einem Wälzkörperkäfig miteinander kombiniert werden.

Alternativ oder zusätzlich können miteinander korrespondierende Kraftschlusselemente vorgesehen sein, welche eine kraft- oder reibschlüssige Verbindung erzeugen, die beispielsweise ausreicht, um Übertragungs- und Wälzkörperaufnahmeelemente einfach als handhabungsfreundliche Einheit zur Montage in der Lenkwelle miteinander zu verbinden.

Alternativ oder zusätzlich kann eine stoffschlüssige Verbindung zwischen Übertragungs- und Wälzkörperaufnahmeelement erfolgen, beispielsweise durch eine Verklebung oder Verschweißung. Wird das Wälzkörperaufnahmeelement aus einem Kunststoff gefertigt, besteht die fertigungstechnisch besonders vorteilhafte Möglichkeit, ein Wälzkörperaufnahmeelement im Spritzgussverfahren an ein Übertragungselement anzuspritzen, oder ganz oder teilweise zu umspritzen, und zumindest teilweise in das Kunststoffmaterial einzubetten. Die stoffschlüssige Verbindung wird erzeugt, indem beim Spritzgießen der schmelzflüssige Kunststoff mit dem Übertragungselement in Kontakt gebracht wird und an den Kontaktflächen haftet. Wird das Übertragungselement von dem Kunststoff umschlossen, ist es unlösbar form- und stoffschlüssig in den Kunststoffkörper eingebettet.

Es kann weiterhin vorgesehen sein, dass das Übertragungselement ein Armierungselement aufweist. Ein Armierungselement kann zur Verstärkung der Formsteifigkeit dienen, beispielsweise ein drucksteifes Element, welches in ein weniger drucksteifes Material eingebettet oder mit einem solchen verbunden ist. Beispielsweise ist es denkbar, ein Armierungsgitter oder-gewebe in einen Kunststoffkörper zu integrieren.

Vorzugsweise weist der Wälzkörperkäfig mindestens ein Wälzkörperaufnahmeelement, bevorzugt mehrere Wälzkörperaufnahmeelemente, und eine Mehrzahl von Übertragungselementen auf. Entsprechend der Querschnittsgeometrie können zwei, drei, vier oder mehr Reihen von Wälzkörpern in Wälzkörperaufnahmeelementen über den Umfang verteilt angeordnet sein, beispielsweise vierfach symmetrisch über den Umfang verteilt wie in dem oben zitierten Stand der Technik. Entsprechend kann jedes der Wälzkörperaufnahmeelemente jeweils eine Mehrzahl von axial aufeinander folgend angeordneten Wälzkörperaufnahmen aufweisen. Dabei ist es vorteilhaft, wenn ein Übertragungselement zwischen in Umfangsrichtung benachbarten Wälzkörperaufnahmeelementen angeordnet ist. Auf diese Weise ist es möglich, jeweils die gleiche Anzahl Wälzkörperaufnahmeelementen und Kraftübertragungselementen einzusetzen, je nach zu erwartender maximaler Belastung können jedoch auch mehr oder weniger erfindungsgemäße Übertragungselemente eingesetzt werden.

Die Erfindung umfasst einen Wälzkörperkäfig für eine teleskopierbare Lenkwelle, der mindestens eine Wälzkörperaufnahme zur frei drehbaren Aufnahme mindestens eines Wälzkörpers aufweist, und der axiale Stützflächen aufweist, wobei axial zwischen den Stützflächen ein Übertragungselement angeordnet ist. Erfindungsgemäß ist vorgesehen, dass das Übertragungselement zumindest teilweise aus einem härteren und/oder festeren Material ausgebildet ist als das Material des Walzkörperaufnahmeelements.

Die Stützflächen sind auf beiden Enden stirnseitig angeordnet, so dass die Anschlagkraft in Achsrichtung als Druckkraft in den Wälzkörperkäfig eingeleitet werden kann. Die Wälzkörperaufnahme ist bevorzugt in einem Wälzkörperaufnahmeelement ausgebildet, welches ausgebildet ist wie oben beschrieben.

Der erfindungsgemäße Wälzkörperkäfig kann ausdrücklich sämtliche vorangehend im Zusammenhang mit der erfindungsgemäßen Lenkwelle genannten Merkmale einzeln oder in Kombination aufweisen, insbesondere aber nicht ausschließlich betreffend das erfindungsgemäße Übertragungselement.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: eine Teilansicht einer Lenkwelle gemäß Figur 1 in auseinander gezogenem Zustand,
- Figur 3: eine Teilansicht der Innenwelle einer Lenkwelle gemäß Figur 1 in auseinander gezogenem Zustand,
- Figur 4: einen Querschnitt durch die Lenkwelle gemäß Figur 1,
- Figur 5: einen Längsschnitt A-A durch die Lenkwelle gemäß Figur 1,
- Figur 6: eine schematische perspektivische Ansicht des Wälzkörperkäfigs der Lenkwelle gemäß Figur 1,
- Figur 7: eine zweite Ausführungsform einer Lenkwelle in einer perspektivischen Teilansicht,
- Figur 8: einen Querschnitt durch die Lenkwelle gemäß Figur 7,
- Figur 9: einen Längsschnitt B-B durch die Lenkwelle gemäß Figur 7,
- Figur 10: eine dritte Ausführungsform in einem Querschnitt,
- Figur 11: eine vierte Ausführungsform in einem Querschnitt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

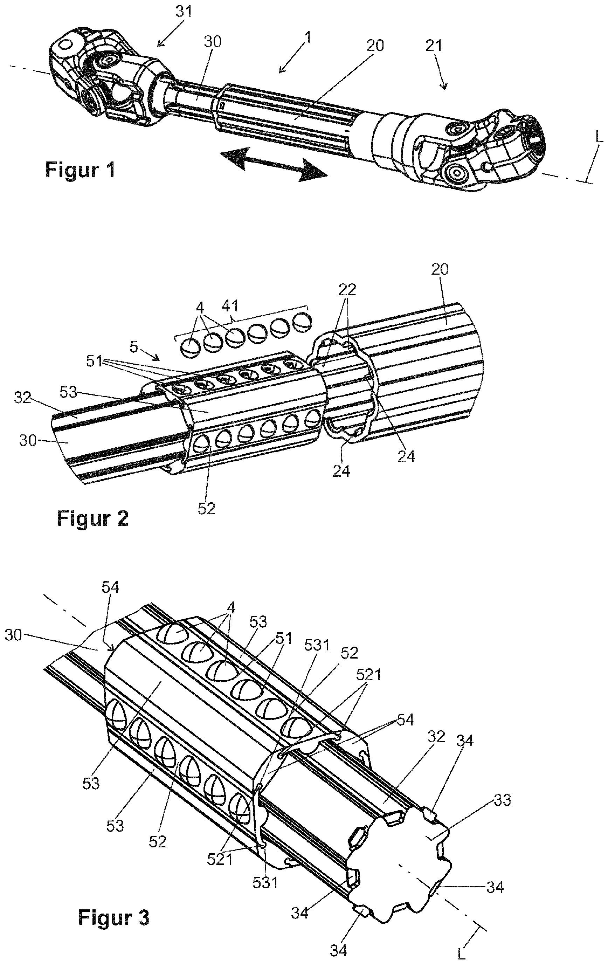

Figur 1 zeigt in perspektivischer Ansicht eine schematisch dargestellte Lenkwelle 1, die eine Hohlwelle 20, auch als äußere Welle oder Außenwelle bezeichnet, und eine Innenwelle 30, auch innere Welle bezeichnet, aufweist, die gegeneinander teleskopierbar sind in Achsrichtung der Längsachse L, d.h. in der mit dem Doppelpfeil angedeuteten axialen bzw. Längsrichtung.

Die Hohlwelle 20 weist an ihrem freien Ende, welches bezüglich der inneren Welle 30 in Längsrichtung abgewandt ist, eine Gabel 21 auf, welche einen Teil eines Universalgelenks bildet, mit dem die Lenkwelle 1 drehmomentschlüssig mit dem nicht weiter dargestellten Lenkstrang verbunden ist. Entsprechend weist die Innenwelle 30 an ihrem freien Ende, welches bezüglich der Hohlwelle 20 in Längsrichtung abgewandt ist, eine Gabel 31 auf, welche einen Teil eines weiteren Universalgelenks bildet, mit dem die Lenkwelle 1 drehmomentschlüssig mit dem Lenkstrang verbunden ist. Die Hohlwelle 20 bevorzugt als Hohlprofile aus gut kaltumformbarem Stahl gefertigt. Die Innenwelle 30 ist im gezeigten Beispiel als Vollwelle ausgebildet. Alternativ kann es jedoch auch vorgesehen sein, dass die Innenwelle 20 als Hohlwelle ausgebildet ist.

Figur 2 zeigt die Lenkwelle 1 gemäß Figur 1 in einer Explosionsdarstellung, in der die Innenwelle 30 aus der Hohlwelle 20 in Richtung der Längsachse L herausgezogen dargestellt ist.

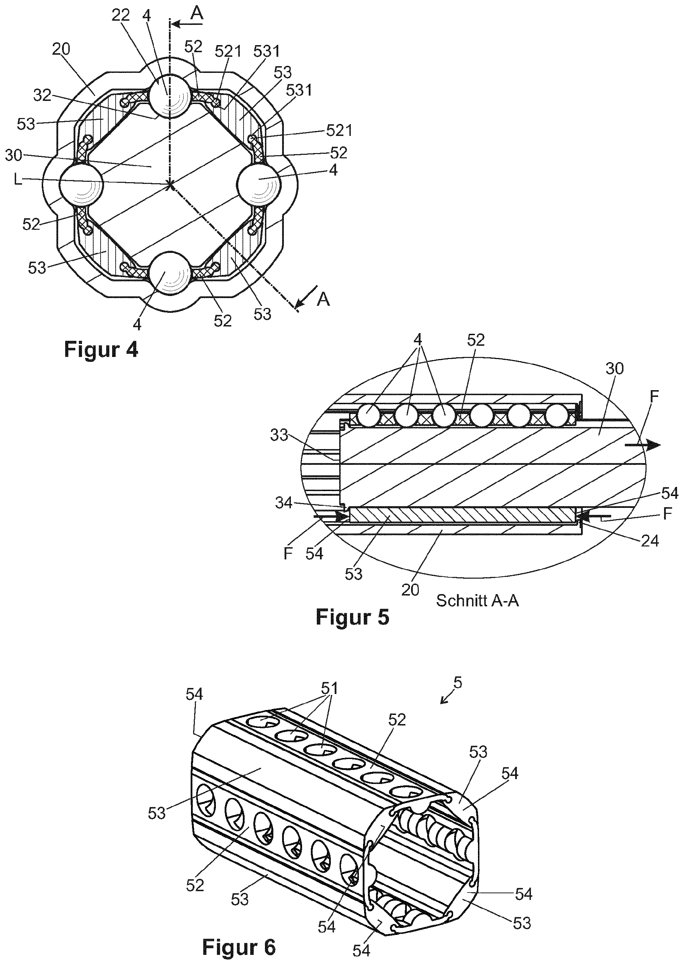

Zwischen der Hohlwelle 20 und der Innenwelle 30 sind als Kugeln 4 ausgebildete Wälzkörper angeordnet, wie dies in dem Querschnitt in Figur 4 und in dem Längsschnitt in Figur 5 erkennbar ist

Die Hohlwelle 20 weist in ihrer Innenfläche in Längsrichtung verlaufende Nuten 22 auf, und die Innenwelle 30 weist diesen radial gegenüberliegende, korrespondierende Nuten 32 auf, die als Wälzkörperlaufbahnen für die Kugeln 4 dienen, d.h. Kugellaufbahnen bilden. Die Kugeln 4 sind zwischen diesen Nuten 22 und 32 derart angeordnet, dass sie in Richtung der Längsachse L darin abrollen können und somit eine lineare Wälzlagerung für eine axiale teleskopierende Relativbewegung von Innenwelle 30 und Hohlwelle 20 bilden. Außerdem dienen die Kugeln 4 als Formschlusselemente, die bezüglich einer relativen Drehung um die Längsachse L formschlüssig in die Nuten 22 und 32 eingreifen, wodurch sie ein als Lenkmoment in die Innenwelle 30 eingebrachtes Drehmoment auf die Hohlwelle 20 übertragen, oder umgekehrt. In dem gezeigten Beispiel sind jeweils vier Nuten 22 bzw. 32 in Umfangsrichtung verteilt um die Längsachse L angeordnet. Die Innenwelle 30 ist in dem gezeigten Beispiel als Vollwelle ausgebildet. Es ist jedoch ebenfalls denkbar und möglich, dass die Innenwelle 30 als Hohlwelle ausgebildet ist.

Die Kugeln 4 sind in einem Wälzkörperkäfig 5 aufgenommen, der als Kugelkäfig ausgebildet ist. Der Wälzlagerkäfig 5 weist für jede der Kugeln 4 eine Wälzkörperaufnahme 51 in Form einer radial durchgehenden Öffnung auf, in der jeweils eine Kugel 4 mit Spiel um ihren Kugelmittelpunkt frei drehbar aufgenommen ist und radial nach innen und außen so weit vorsteht, dass sie in den Nuten 22 und 32 in Längsrichtung ungehindert abrollen kann.

Die Anordnung des auf der Innenwelle 30 montierten Wälzkörperkäfigs 5 mit eingesetzten Kugeln 4 ist in Figur 3 dargestellt, die eine perspektivische Ansicht auf das freie Ende 33 der Innenwelle 30 zeigt, welches in dem Bauzustand von Figur 1 in die Öffnung der Hohlwelle 20 eintaucht.

Jeweils eine Mehrzahl von Wälzkörperaufnahmen 51 ist in Längsrichtung jeweils mit axialem Abstand zueinander angeordnet, so dass die darin aufgenommenen Kugeln 4 jeweils eine axiale Kugelreihe 41 bilden, im dem dargestellten Beispiel aus jeweils sechs Kugeln 4. Die Wälzkörperaufnahmen 51 für die Kugeln 4 einer Kugelreihe 41 sind jeweils in einem Wälzkörperaufnahmeelement 52 ausgebildet. In Umfangsrichtung erstreckt sich jedes der im Beispiel vier Wälzkörperaufnahmeelemente 52 im Bereich der Nuten 22 bzw. 32.

In Umfangsrichtung sind zwischen den Wälzkörperaufnahmeelementen 52 erfindungsgemäße Übertragungselemente 53 angeordnet, wobei die vier Wälzkörperaufnahmeelemente 52 und ebenfalls vier Übertragungselemente 53 in Umfangsrichtung abwechselnd angeordnet und miteinander verbunden sind. Durch diese Anordnung hat der Wälzkörperkäfig 5 die Form eines hülsenförmigen Hohlprofils mit achteckigem Querschnitt, dessen Seitenflächen abwechselnd durch Wälzkörperaufnahmeelemente 52 und Übertragungselemente 53 gebildet werden.

In der in den Figuren 3 bis 6 gezeigten Ausführungsform weisen die Wälzkörperaufnahmeelemente 52 Formschlusselemente 521 und die Übertragungselemente 53 Formschlusselemente 531 auf, die formschlüssig ineinander eingreifen. Die Formschlusselemente 521 sind als in Längsrichtung verlaufende, leistenartige Vorsprünge mit einem hinterschnittenen, kopfartigen Querschnitt ausgebildet, mit dem sie in die als korrespondierende, hinterschnittene Nuten ausgebildeten Formschlusselemente 531 in den Übertragungselementen 53 in Umfangsrichtung formschlüssig einrastbar sind. Zusätzlich oder alternativ kann die Verbindung stoffschlüssig erfolgen, beispielsweise durch Verklebung oder Ultraschallschweißen.

Die Übertragungselemente 53 weisen auf ihren beiden axialen Stirnseiten jeweils eine axiale Stützfläche 54 auf. Anders ausgedrückt erstreckt sich jedes der Übertragungselemente 53 zwischen seinen Stützflächen 54. Auf der einen Stirnseite, die dem Ende 33 zugewandt ist, liegt eine der Stützflächen 54 in axialer Richtung jeweils einem Anschlagelement 34 gegenüber, welches von der Innenwelle 30 radial nach außen vorsteht. Ein derartiges Anschlagelement 34 wird beispielsweise durch einen plastisch umgeformten Bereich, etwa eine Verstemmung, gebildet, die in den Zwischenraum zwischen Innenwelle 30 und Hohlwelle 20 vorsteht, wie dies in dem Längsschnitt durch die zusammengebaute Lenkwelle 1 in Figur 5 gezeigt ist.

Die Stützflächen 54 auf der anderen Stirnseite, welche dem Ende 34 abgewandt ist, liegen in axialer Richtung jeweils einem Anschlagelement 24 gegenüber, welches von der Innenseite der Hohlwelle 20 radial nach innen in den Zwischenraum zwischen Innenwelle 30 und Hohlwelle 20 vorsteht. Ein Anschlagelement 24 kann ebenfalls wie dargestellt durch eine Verstemmung gebildet werden, die einen in radialer Richtung plastisch umgeformten Bereich umfasst.

Die Anschlagelemente 24 und 34 stehen in den Zwischenraum zwischen Hohlwelle 20 und Innenwelle 30 vor, in dem sich die Übertragungselemente 53 bei einer Verstellung der Lenkwelle 1 in Richtung der Längsasche L vor oder zurück bewegen. Beim Auseinanderziehen der Lenkwelle 1 werden die Anschlagelemente 24 und 34 aufeinander zu bewegt, bis sie an den besagten Stützflächen 54 gegen an dem dazwischen liegenden Wälzkörperkäfig 5 anschlagen.

Figur 4 zeigt einen Querschnitt durch die Lenkwelle 1. Daraus geht in seiner Grundform achteckige Querschnitt hervor, wobei über den Umfang gleichmäßig verteilt in jeder zweiten Seitenfläche die Nuten 22 und 32 angeordnet sind, zwischen denen die Wälzkörperaufnahmeelemente 52 mit den Kugeln 4 angeordnet sind. Auf den im Umfang dazwischen liegenden Seitenflächen befinden sich im Zwischenraum zwischen Innenwelle 30 und Hohlwelle 20 die erfindungsgemäßen Übertragungselemente 53.

Figur 5 zeigt ausschnittweise im Längsschnitt A-A gemäß Figur 4 die Anschlagsituation bei maximal ausgezogener Lenkwelle 1. Dabei wirkt auf die Hohlwelle 20 und die Innenwelle 30 eine relative Auszugkraft F. Über die Anschlagelemente 34 und 24 wird diese Auszugkraft F als Druckkraft auf die Stützflächen 54 übertragen. Mit den beiden gegeneinander gerichteten Kraftpfeilen wird angedeutet, wie die Auszugkraft F axial auf das Übertragungselement 53 wirkt. Das Übertragungselement 53 wird umso stärker in Längsrichtung auf Druck belastet, je größer die Auszugkraft F ist.

Um sicherzustellen, dass durch hohe Auszugkräfte F keine schädliche Deformierung der Wälzkörperaufnahmeelemente 52 erfolgt, haben die Übertragungselemente 53 erfindungsgemäß eine höhere Formsteifigkeit als die Wälzkörperaufnahmeelemente 52, insbesondere bezüglich einer axialen Belastung. Beispielsweise können die Übertragungselemente 53 aus Stahl hergestellt werden, bevorzugt als Kaltumformteile, als metallische Sinterteile, als Druckgussteil oder als Spritzgussteil. Durch ihre relativ einfache Form als in Längsrichtung durchgehender Profilabschnitt mit gleichbleibendem Querschnitt ist eine rationelle Fertigung als Endlos-Halbzeug möglich, von dem Übertragungselemente 53 in der durch den Wälzkörperkäfig 5 vorgegebenen Länge abgelängt werden. Aufgrund der hohen Festigkeit und Härte können die Übertragungselemente 53 aus metallischem Werkstoff bereits bei relativ geringen Materialquerschnitten hohe Druckkräfte ohne die Gefahr von plastischen Verformungen aufnehmen.

Die Wälzkörperaufnahmeelemente 52 sind bevorzugt als Kunststoff-Spritzgussteile aus thermoplastischem Elastomer oder thermoplastischem Kunststoff ausgebildet. Dadurch kann eine komplexe Formgebung zur Ausbildung der Wälzkörperaufnahmen 51 problemlos realisiert werden, und es ist eine rationelle Fertigung möglich. Der elastische Kunststoff ermöglich es weiterhin, die Wälzkörperaufnahmen 51 zumindest teilweise federelastisch auszugestalten, beispielsweise mit federnden Halteelementen, so dass die Kugeln 4 federnd eingeschnappt werden können, und im losen Formschluss unverlierbar gehalten werden, wodurch die Handhabung und Montage erleichtert wird. Die Formschlusselemente 521 zur Verbindung mit den Übertragungselementen 53 können ebenfalls einfach realisiert werden, beispielsweise als federnde, formschlüssig einrastbare Rastelemente.

Durch den relativ filigranen Aufbau und den relativ weichen Kunststoff können die Wälzkörperaufnahmeelemente 52 nur eine geringe Kraft aufnehmen. Diese Aufgabe wird durch die erfindungsgemäßen Übertragungselemente 53 übernommen, wodurch die Wälzkörperaufnahmeelemente 52 auch bei hohen Anschlagkräften im Wesentlichen kraftfrei bleiben. Entsprechend besteht auch bei hohen Belastungsspitzen keine Gefahr, dass die Funktion des Wälzlagerkäfigs 5 beeinträchtigt wird.

Die Übertragungselemente 53 füllen den mehreckigen Querschnitt des Zwischenraums zwischen Hohlwelle 20 und Innenwelle 30 wie in Figur 4 erkennbar aus. Dadurch bilden sie Formschlusselemente bezüglich einer relativen Drehung von Hohlwelle 20 und Innenwelle 30, die sich im gezeigten Betriebszustand im losen Formschluss befinden, also nicht, zumindest nicht gleichzeitig an Hohlwelle 20 und Innenwelle 30 anliegen. Im Notfall, wenn Kugeln 4 beschädigt oder aus den Nuten 22 und 32 entfernt werden, können die Übertragungselemente 53 die Funktion als Formschlusselemente übernehmen, welche die Übertragung eines Lenkmoments ermöglichen. Somit können die Übertragungselemente 53 zusätzlich eine redundante Drehmomentenübertragung zwischen Hohlwelle 20 und Innenwelle 30 bereitstellen. Für diese zusätzliche Funktion ist es ebenfalls vorteilhaft, dass die Übertragungselemente aus einem formsteifen, bevorzugt metallischen Werkstoff wie beispielsweise Stahl bestehen. Dadurch wird das Sicherheitsniveau der Lenkwelle und somit einer Lenksäule erhöht.

Figur 6 zeigt noch einmal einen Wälzkörperkäfig 5 gemäß der vorangehenden Figuren in einer einzelnen perspektivischen Darstellung ohne Kugeln 4.

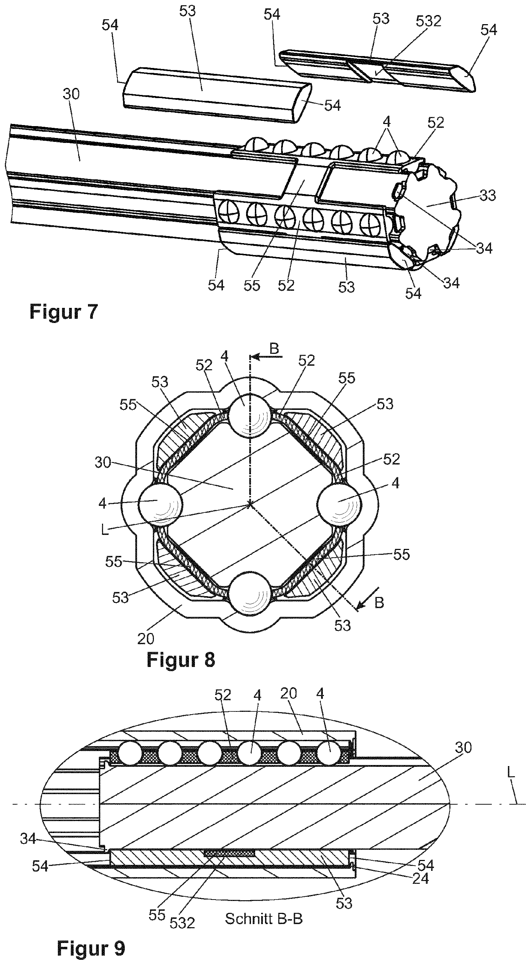

In den Figuren 7, 8 und 9 ist eine zweite Ausführungsform einer Lenkwelle 1 gezeigt, in Ansichten, die den Figuren 3, 4 und 5 entsprechen. Figur 9 zeigt einen Schnitt B-B gemäß Figur 8.

Die Innenwelle 30 ist gleich ausgebildet wie in der vorangehenden Ausführung. Die Wälzkörperaufnahmeelemente 52 sind ebenfalls, zumindest bezüglich der Anordnung der Kugeln 4 gleichartig ausgebildet. Dabei sind die Wälzkörperaufnahmeelemente 52 über stegförmige Verbindungselemente 55 in Umfangsrichtung ringartig zu einer hülsenartigen Struktur miteinander verbunden, die zusammen mit den Wälzkörperaufnahmeelementen 52 als einstückiges Kunststoff-Spritzgussteil ausgebildet ist. Dies ist gut in dem Querschnitt von Figur 8 erkennbar.

Das Verbindungselement 55 dient weiterhin als Befestigungselement, welches zur Befestigung in ein Formschlusselement 532 in Form einer korrespondierenden Vertiefung oder Ausnehmung in dem Übertragungselement 53 formschlüssig einsetzbar ist. Dabei kann die Haltewirkung durch - nicht dargestellte - Rastelemente, Haftreibung oder zusätzlich oder alternativ durch Verklebung oder Ultraschallschweißen erfolgen. Die Anordnung in zusammengebautem Zustand ist in den Figuren 8 und 9 erkennbar, wobei der Längsschnitt B-B in Figur 9 den formschlüssigen Eingriff des Verbindungselements 55 in das Formschlusselement 532. Dadurch ist das Übertragungselement 53 am Wälzkörperkäfig 5 sicher in Position gehalten.

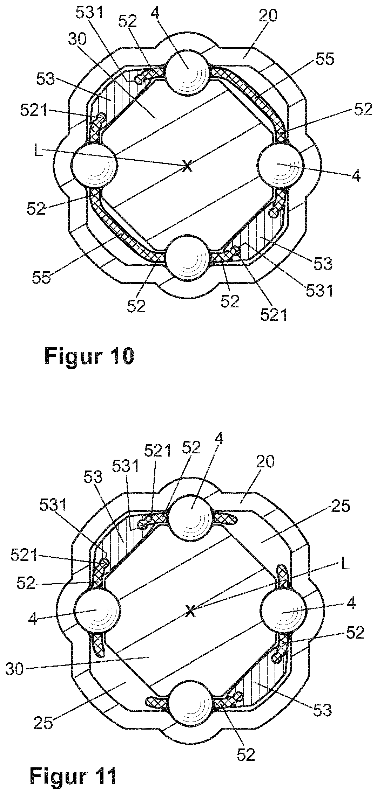

Figur 10 zeigt in einer Querschnittsansicht wie in Figuren 4 und 7 eine dritte Ausführungsform. Dabei sind jeweils zwei Wälzkörperaufnahmeelemente 52 über ein Verbindungselement 55 einstückig miteinander verbunden, bevorzugt in Form eines Kunststoff-Spritzgussteils. Über zwei Übertragungselemente 53, die gleichartig ausgebildet sein können wie in der in Figur 4 dargestellten Ausführungsform, sind die zwei Wälzkörperaufnahmeelemente 52 zu einem im Ganzen hülsenförmigen Wälzkörperkäfig 5 miteinander verbunden. Zur Verbindung können ebenfalls korrespondierende Formschlusselemente 521, 531 vorgesehen sein.

Eine weitere mögliche Ausführungsform ist in Figur 11 ebenfalls im Querschnitt gezeigt. Dabei sind jeweils zwei einzelne, separate Wälzkörperaufnahmeelemente 52, die ähnlich ausgebildet sein können wie in Figur 4, über ein Übertragungselement 53 miteinander verbunden, welches ähnlich ausgestaltet sein kann wie in Figur 10 oder 4. Im Unterschied zu den vorangehenden Ausführungen ist der Wälzkörperkäfig 5 nicht hülsenförmig-geschlossen, einteilig ausgebildet, sondern im Bereich 25 des Zwischenraums in Längsrichtung zweigeteilt. Dadurch wird eine segmentartige Bauform realisiert, welche eine radiale Montage auf der Innenwelle 30 ermöglicht.

Anhand der unterschiedlichen Ausführungsformen gemäß den Figuren 4, 7, 10 und 11 ist erkennbar, dass die erfindungsgemäße Kombination von Wälzkörperaufnahmeelementen 52 und Übertragungselementen 53 eine flexible Anpassung an unterschiedliche Anforderungen ermöglicht.

### Bezugszeichenliste

- 1: Lenkwelle
- 20: Hohlwelle
- 21: Gabel
- 22: Nut
- 24: Anschlagelement
- 25: Zwischenraum
- 30: Innenwelle
- 31: Gabel
- 32: Nut
- 33: Ende
- 34: Anschlagelement
- 4: Kugel
- 41: Kugelreihe
- 5: Wälzkörperkäfig
- 51: Wälzkörperaufnahme
- 52: Wälzkörperaufnahmeelement
- 521: Formschlusselement
- 53: Übertragungselement
- 531: Formschlusselement
- 532: Formschlusselement
- 54: Stützfläche
- 55: Verbindungselement

- L: Längsachse
- F: Auszugkraft

## Patentansprüche

1. Lenkwelle (1) für ein Kraftfahrzeug, umfassend eine Hohlwelle (20), in der koaxial eine Innenwelle (30) in Achsrichtung teleskopierbar angeordnet ist, wobei mindestens ein Wälzkörper (4) in Umfangsrichtung formschlüssig und in Achsrichtung abrollbar in einem Wälzkörperaufnahmeelement (52) eines zwischen Innenwelle (30) und Hohlwelle (20) angeordneten Wälzkörperkäfigs (5) aufgenommen ist, der in Achsrichtung zwischen radial vorstehenden Anschlagelementen (24) der Hohlwelle (20) und radial vorstehenden Anschlagelementen (34) der Innenwelle (30) angeordnet ist, wobei der Wälzkörperkäfig (5) endseitige axiale Stützflächen (54) aufweist, die in Achsrichtung gegen die Anschlagelemente (24, 34) gerichtet sind,
wobei der Wälzkörperkäfig (5) zumindest ein Übertragungselement (53) aufweist, welches sich axial zwischen den Stützflächen (54) erstreckt, **dadurch gekennzeichnet,**
**dass** das Übertragungselement (53) zumindest teilweise aus einem härteren und/oder festeren Material ausgebildet ist als das Material des Walzkörperaufnahmeelements (52).

2. Lenkwelle nach Anspruch 1, **dadurch gekennzeichnet, dass** das Übertragungselement (53) härter und/oder steifer und/oder fester ausgebildet ist als das Wälzkörperaufnahmeelement (52).

3. Lenkwelle nach einem der vorangehenden Ansprüche, **dadurch gekennzeichnet, dass** das Übertragungselement (53) eine Materialverdickung aufweist.

4. Lenkwelle nach einem der vorangehenden Ansprüche, **dadurch gekennzeichnet, dass** das Material des Übertragungselements (53) ein metallisches Material ist.

5. Lenkwelle nach einem der vorangehenden Ansprüche, **dadurch gekennzeichnet, dass** das Wälzkörperaufnahmeelement (52) als Kunststoff-Spritzgussteil ausgebildet ist.

6. Lenkwelle nach einem der vorangehenden Ansprüche, **dadurch gekennzeichnet, dass** das Übertragungselement (53) und das Wälzkörperaufnahmeelement (52) formschlüssig und/oder kraftschlüssig und/oder stoffschlüssig miteinander verbunden sind.

7. Lenkwelle nach einem der vorangehenden Ansprüche, **dadurch gekennzeichnet, dass** das Übertragungselement (53) ein Armierungselement aufweist.

8. Lenkwelle nach einem der vorangehenden Ansprüche, **dadurch gekennzeichnet, dass** der Wälzkörperkäfig (5) mindestens ein Wälzkörperaufnahmeelement (52) und eine Mehrzahl von Übertragungselementen (53) und aufweist.

9. Lenkwelle nach einem der vorangehenden Ansprüche, **dadurch gekennzeichnet, dass** der Wälzkörperkäfig (5) hülsenförmig ausgebildet ist.

10. Wälzkörperkäfig (5) für eine teleskopierbare Lenkwelle gemäß einem der Ansprüche 1 bis 9, der mindestens eine Wälzkörperaufnahme (51) zur frei drehbaren Aufnahme mindestens eines Wälzkörpers (4) aufweist, und der axiale Stützflächen (54) aufweist, wobei axial zwischen den Stützflächen (54) ein Übertragungselement (53) angeordnet ist, **dadurch gekennzeichnet,**
**dass**.das Übertragungselement (53) zumindest teilweise aus einem härteren und/oder festeren Material ausgebildet ist als das Material des Walzkörperaufnahmeelements (52).

## Claims

1. A steering shaft (1) for a motor vehicle, comprising a hollow shaft (20) in which an inner shaft (30) is arranged telescopically coaxially in the axial direction, wherein at least one rolling body (4) is held with form fit in the circumferential direction and able to roll in the axial direction in a rolling body holding element (52) of a rolling body cage (5) arranged between the inner shaft (30) and the hollow shaft (20), which is arranged in the axial direction between radially projecting stop elements (24) of the hollow shaft (20) and radially projecting stop elements (34) of the inner shaft (30), wherein the rolling body cage (5) has end-face axial support surfaces (54) which are oriented in the axial direction against the stop elements (24, 34), wherein the rolling body cage (5) has at least one transfer element (53) extending axially between the support surfaces (54), **characterized in that**
the transfer element (53) is formed at least partly from a harder and/or stronger material than the material of the rolling body holding element (52).

2. The steering shaft according to claim 1, **characterized in that** the transfer element (53) is formed harder and/or more rigid and/or stronger than the rolling body holding element (52).

3. The steering shaft as claimed in one of the preceding claims, **characterized in that** the transfer element (53) has a material thickening.

4. The steering shaft as claimed one of the preceding claims, **characterized in that** the material of the transfer element (53) is a metallic material.

5. The steering shaft as claimed in one of the preceding claims, **characterized in that** the rolling body holding element (52) is formed as an injection-molded plastic part.

6. The steering shaft as claimed in one of the preceding claims, **characterized in that** the transfer element (53) and the rolling body holding element (52) are joined together by form fit and/or force locking and/or material bonding.

7. The steering shaft as claimed in one of the preceding claims, **characterized in that** the transfer element (53) comprises a reinforcement element.

8. The steering shaft as claimed in one of the preceding claims, **characterized in that** the rolling body cage (5) comprises at least one rolling body holding element (52) and a plurality of transfer elements (53).

9. The steering shaft as claimed in one of the preceding claims, **characterized in that** the rolling body cage (5) is sleeve shaped.

10. A rolling body cage (5) for a telescopic steering shaft as claimed in one of claims 1 to 9, comprising at least one rolling body holder (51) to hold at least one rolling body (4) in a freely rotatable manner, and comprising axial support surfaces (54), wherein a transfer element (53) is arranged axially between the support surfaces (54).
**characterized in that**
the transfer element (53) is formed at least partly from a harder and/or stronger material than the material of the rolling body holding element (52).

## Revendications

1. Arbre de direction (1) destiné à un véhicule automobile, ledit arbre comprenant un arbre creux (20) dans lequel un arbre intérieur (30) est disposé coaxialement de manière télescopique dans la direction axiale, au moins un élément roulant (4) étant reçu, par complémentarité de formes dans la direction circonférentielle et de manière à pouvoir rouler dans la direction axiale, dans un élément de réception d'éléments roulants (52) d'une cage d'éléments roulants (5) qui est disposée entre l'arbre intérieur (30) et l'arbre creux (20) et qui est disposée dans la direction axiale entre des éléments de butée (24), faisant saillie radialement, de l'arbre creux (20) et des éléments de butée (34), faisant saillie radialement, de l'arbre intérieur (30), la cage d'éléments roulants (5) comportant des surfaces de support axiales (54) du côté extrémité qui sont dirigées dans la direction axiale vers les éléments de butée (24, 34),
la cage d'éléments de roulement (5) comportant au moins un élément de transmission (53) qui s'étend axialement entre les surfaces de support (54), **caractérisé en ce que**
l'élément de transmission (53) est au moins partiellement formé à partir d'un matériau plus dur et/ou plus résistant que le matériau de l'élément de réception d'éléments roulants (52).

2. Arbre de direction selon la revendication 1, **caractérisé en ce que** l'élément de transmission (53) est conçu pour être plus dur et/ou plus rigide et/ou plus résistant que l'élément de réception d'éléments roulants (52).

3. Arbre de direction selon l'une des revendications précédentes, **caractérisé en ce que** l'élément de transmission (53) comporte un épaississement de matériau.

4. Arbre de direction selon l'une des revendications précédentes, **caractérisé en ce que** le matériau de l'élément de transmission (53) est un matériau métallique.

5. Arbre de direction selon l'une des revendications précédentes, **caractérisé en ce que** l'élément de réception d'éléments roulants (52) est réalisé sous la forme d'une pièce moulée par injection de matière synthétique.

6. Arbre de direction selon l'une des revendications précédentes, **caractérisé en ce que** l'élément de transmission (53) et l'élément de réception d'éléments roulants (52) sont reliés l'un à l'autre par une liaison par complémentarité de formes et/ou une liaison en force et/ou une liaison de matière.

7. Arbre de direction selon l'une des revendications précédentes, **caractérisé en ce que** l'élément de transmission (53) comporte un élément de renforcement.

8. Arbre de direction selon l'une des revendications précédentes, **caractérisé en ce que** la cage d'éléments roulants (5) comporte au moins un élément de réception d'éléments roulants (52) et une pluralité d'éléments de transmission (53) et.

9. Arbre de direction selon l'une des revendications précédentes, **caractérisé en ce que** la cage d'éléments roulants (5) est en forme de manchon.

10. Cage d'éléments roulants (5) destinée à un arbre de direction télescopique selon l'une des revendications 1 à 9, laquelle cage comporte au moins un logement d'éléments roulants (51) destiné à recevoir en rotation libre au moins un élément roulant (4) et comporte des surfaces de support axiales (54), un élément de transmission (53) étant disposé axialement entre les surfaces de support (54), **caractérisé en ce que** l'élément de transmission (53) est formé au moins partiellement d'un matériau plus dur et/ou plus résistant que le matériau de l'élément de réception d'éléments roulants (52).
